Europäisches Patentamt

European Patent Office

Office européen des brevets

(11) Publication number: **0 181 134**
**B1**

## EUROPEAN PATENT SPECIFICATION

(45) Date of publication of patent specification: **09.05.90**

(51) Int. Cl.⁵: **H 01 M 8/06, H 01 M 8/04**

(21) Application number: **85307767.5**

(22) Date of filing: **28.10.85**

(54) Fuel cell system having electrolyte reclaiming means.

(30) Priority: **29.10.84 US 665488**
**21.10.85 US 788141**

(43) Date of publication of application:
**14.05.86 Bulletin 86/20**

(45) Publication of the grant of the patent:
**09.05.90 Bulletin 90/19**

(84) Designated Contracting States:
**AT BE CH DE FR GB IT LI LU NL SE**

(56) References cited:
**EP-A- 158 583**
**EP-A-0 107 396**
**FR-A-2 287 784**
**FR-A-2 511 885**
**FR-A-2 532 478**
**US-A-3 956 013**
**US-A-4 414 291**

**PATENTS ABSTRACTS OF JAPAN, vol. 9, no.
204 (E-337)1927r, 21st August 1985; & JP-A-60
70 671 (FUJI DENKI SOUGOU KENKYUSHO
K.K.) 22-04-1985**

(73) Proprietor: **ENGELHARD CORPORATION
70 Wood Avenue South CN 770
Iselin New Jersey 08830 (US)**

(72) Inventor: **Feigenbaum, Haim
Tnuat Hameri 2
Kiryat Onno (IL)**
Inventor: **Kaufman, Arthur
69 Burnett Terrace
West Orange New Jersey (US)**
Inventor: **Singh, Rajindar
39 Corsa Terrace
Ridgewood New Jersey (US)**

(74) Representative: **Fisher, Adrian John et al
CARPMAELS & RANSFORD 43 Bloomsbury
Square
London WC1A 2RA (GB)**

(56) References cited:

The file contains technical information
submitted after the application was filed and
not included in this specification

Courier Press, Leamington Spa, England.

## Description

Background of the Invention

The invention relates to fuel cells and, more particularly, to reclaiming and reducing electrolyte from reactants.

Reference is hereby made to other related patents and patent applications which are assigned to the same assignee as the present application; application of H. Feigenbaum entitled "Fuel Cell With Electrolyte Feed System," Serial No. 430,156* filed September 30, 1982; Application of O. Adlhart entitled "Fuel Cell With Multiple Porosity Electrolyte Matrix Assembly," Serial No. 430,143* filed on September 30, 1982; U.S. Patent 4,463,066 of O. Adlhart et al; U.S. Patent 4,463,067 of H. Feigenbaum; and U.S. Patent 4,463,068 of Cohn, et al.

\* see EP—A—0106605

Much research is being done in the area of fuel cell technology in order to provide ever increasing amounts of electric power and for operating such cells over longer periods of time without any need for shutdown to accomplish maintenance. As compared to other methods of generation of electric power from combustible fuels, a fuel cell has higher efficiency and is also characterized by a simplicity of physical structure in that such cells can be constructed without any or relatively few moving parts.

While a variety of electrochemical reactions are known for the conversion of fuel into electricity without the direct burning of such fuels, one well known form of cell utilizes the reaction between air or oxygen and hydrogen, the hydrogen serving as the fuel. One common form of construction for the hydrogen-air/oxygen cell is the laminated structure wherein the electrodes are spaced apart by a porous layer of material which holds an electrolyte. For example, the electrolyte may be a concentrated phosphoric acid. The hydrogen is guided by passageways behind the active region of the anode, and the air or oxygen is guided by passageways behind the active region of the cathode. At the anode, the hydrogen gas dissociates into hydrogen ions plus electrons in the presence of a catalyst, typically a precious metal such as platinum or platinum with other metals. The hydrogen ions migrate through the electrolyte to the cathode in a process constituting ionic current transport while the electron travels through an external circuit to the cathode. In the presence of a catalyst at the cathode, the hydrogen ions, the electrons, and molecules of air or oxygen combine to produce water.

In order to provide for the physical placement of the respective reactants at catalyst layers of the anode and cathode, layers of materials having hydrophilic and hydrophobic properties are disposed in an arrangement contiguous to the catalyst layers. They permit the electrolyte and the air or oxygen at the cathode and the hydrogen at the anode to contact the catalyst layer. The hydrophobic material is provided with pores of sufficiently large size to permit the gaseous hydrogen and the gaseous air or oxygen to freely flow through the material so as to come into contact with the catalyst.

Details in the construction of fuel cells, and in the components parts thereof, are disclosed in the United States Patents 3,453,149 of Adlhart and 4,064,322 of Bushnell. These two patents show structures for guiding the gaseous reactants into the regions of the catalyst. In addition, the Bushnell patent shows space within a cell for the storage of electrolyte so as to compensate for any changes in the quantity of electrolyte available for ion transport. An assembly for combining together a plurality of fuel cells in a single power source is disclosed in U.S. Patent 4,175,165 of Adlhart. This patent also shows manifolds for the simultaneous feeding of the reactant gases to the cathode and the anode of the respective cells.

To provide increased amounts of electric power and operation over longer periods of time, fuel cells are often assembled as a plurality. A common type of fuel cell assembly is the fuel cell stack. The fuel cell stack allows the cells to be assembled in a convenient and compact manner for various different applications. Fuel cells and stacks in particular are usually contained in a protective container which help to provide support for the assembly and more significantly to define entrances for fuel cell reactants.

Separate reactant entrances and exits are provided for each reactant, especially when the fuel cells are in a stacked configuration. The assembly of the stack and container is such that the reactants are maintained separate and distinct from one another. The means for supplying the reactants to the fuel cells can include a simple device such as a fan or the like. Thus, the reactants are introduced into their respective passageways uncontaminated by any other reactant.

In the operation of a conventional fuel cell, the electrochemical reaction takes place after the reactants travel through their respective passageways within the fuel cell to catalyst areas of the electrodes. The electrodes, anode and cathode are maintained in a spaced relationship to one another, the space being at least partially filled by electrolyte. The electrolyte, of course, provides a means of ionic transport between the electrodes and is usually held in a matrix material. In addition, electrolyte held in a storage system may be used to replenish the electrolyte in the matrix of each cell as required.

One method of solving the problem of electrolyte loss in the matrix has been the method of storing additional electrolyte in a reservoir and distributing this stored electrolyte to the matrix when the electrolyte needs to be replenished. Such storage and feed means are disclosed in aforementioned patents and patent applications: U.S. Patent 4,463,066, U.S. Patent 4,463,068, U.S. Patent 4,463,067 and Patent Application Serial No. 430,156.

A problem arises when a cell in the stack experiences a loss of electrolyte from within the matrix. These losses, for instance, are usually the result of electrolyte volume changes, such as those due to temperature and composition changes, resulting in electrolyte evaporation. The electrolyte vapor or droplets from the cell tend to migrate into the passageways behind the electrodes. An electrolyte mist then forms in the passageways when the vapor or droplets mix with the reactant. This electrolyte mist is carried with the reactants as they flow out of the cell and, in case of air or oxygen reactants, when the air or oxygen exits to the atmosphere from the stack. Thus, the exiting reactants are contaminated by the electrolyte mist as the reactants exit the system.

A further problem arises with the loss of electrolyte. Depending on the amount of storage capacity of a cell or in an electrolyte storage system that supplies additional electrolyte to each cell as required, the fuel cells can only be operated for a limited length of time before there is not enough electrolyte for proper operation. In this case, the system must be shut down for maintenance; that is, the replenishment of the lost electrolyte in the requisite concentration, or the cell or stack may burn out. However, supplying additionally stored electrolyte from a fixed capacity storage system to the matrix does not solve the problem of wasteful loss of electrolyte indefinitely or of effluents being placed in the air or oxygen surrounding the fuel cell stack.

Prior systems have been designed to contain electrolyte on the proper side of the electrode. For instance, one method of collecting electrolyte that has undesirably penetrated into the gas side of the electrode is disclosed in U.S. Patent 3,708,341 of Biddick. This patent discloses a means to collect and return the electrolyte after it has formed into droplets on the gas side surface of the electrode. However, Biddick appears to only describe a means to return electrolyte to the matrix before it escapes from the fuel cell. In addition, Biddick does not appear to address the problem of reclaiming electrolyte vapor, nor does Biddick solve the problem of reclaiming the electrolyte once it has been lost from the fuel cell.

Another system for reclaiming electrolyte is disclosed in U.S. Patent 4,414,291 to Breault which describes a construction for internally condensing evaporated electrolyte before it leaves the fuel cell. The condensed electrolyte is taken up by the cell electrode and redistributed throughout the cell by diffusion and capillary action. Another disclosure, U.S. Patent 3,861,958 to Cheron discloses a complex system of pumps, valves, cooling devices and the like for recovering liquid electrolyte leaks in a fuel cell.

FR-A-2532478 describes a system for reclaiming electrolyte which is lost from a fuel cell by passing the exhaust gas from the cell between closely spaced porous walls on which the electrolyte condenses in the form of droplets.

EP-A-0107396 describes an electrolyte distribution and supply system for use with a fuel cell stack, in which electrolyte is wicked to the cells by means of capillary tubes containing carbon fibers.

EP-A-0158583 discloses the use of condensers to recover electrolyte from the exhaust gas of a fuel cell, for subsequent return to the fuel cell.

Advantages of the present invention include the provision of a system wherein electrolyte in the form of a mist contained in the existing reactant gases may be separated from the reactants before they are discharged. The electrolyte mist is collected from the reactant gas at an efficient rate and can be reclaimed for redistribution to the fuel cells or for storage either internally or externally of the system. The invention also provides for the removal of an electrolyte effluent from the reactant gases before they discharge into the atmosphere.

Summary of the Invention

The foregoing problems are overcome and other advantages are provided by a fuel cell with a system for reclaiming vaporized or misted electrolyte thereto and by the method of operating said fuel cell as defined in Claims 1 and 9 respectively. The reclaimed electrolyte may be transported back into the fuel cell system or externally thereof.

In one embodiment, the fuel cell is constructed with an electrolyte supporting structure having a means to draw and distribute electrolyte therein, and the reclamation system is constructed so as to return electrolyte mist carried out of the fuel cell to the electrolyte distribution system for availability to the cell by a reactant.

In accordance with an embodiment of the invention, reactant exiting from the fuel cell containing the electrolyte mist is circulated to an electrolyte collecting unit. The reactant passes through a carbon fiber sponge such that the electrolyte is collected by this sponge. The sponge is in direct contact with a carbon fiber wick which is connected to the electrolyte distribution and storage system. As the amount of electrolyte in the carbon fiber sponge increases, a wicking process takes place in which the excess electrolyte is transported via the carbon fiber wick back to the electrolyte distribution and storage system.

In another embodiment, the fuel cell is constructed with an electrolyte supporting structure having a means to draw and distribute electrolyte therein with the reclamation system constructed so as to return the electrolyte to an electrolyte storage system for eventual use with an electrolyte distribution system.

In yet another embodiment, the reclamation system is constructed to transport the collected electrolyte externally of the system.

Brief Description of the Drawings

The foregoing aspects and other features of the invention are explained in the following description taken in connection with the accompanying drawings wherein:

Figure 1 is a perspective sectioned view of a portion of a fuel cell stack showing one complete fuel cell with an electrolyte replenishment conduit;

Figure 2 is a diagrammatic view of a system for supplying electrolyte to a cell stack and reclaiming electrolyte mist from the air or oxygen reactant and returning the electrolyte to the supplying system;

Figure 3 is an enlarged, more detailed, diagrammatic view of the electrolyte collecting unit as shown in Figure 2;

Figure 4 is a diagrammatic view of an alternate embodiment of the invention wherein the reclaimed electrolyte is returned to the electrolyte reservoir of the fuel cell stack; and

Figure 5 is a diagrammatic view of a system of another alternate embodiment of the invention wherein the collected electrolyte is stored externally of the fuel cell system.

Detailed Description of the Invention

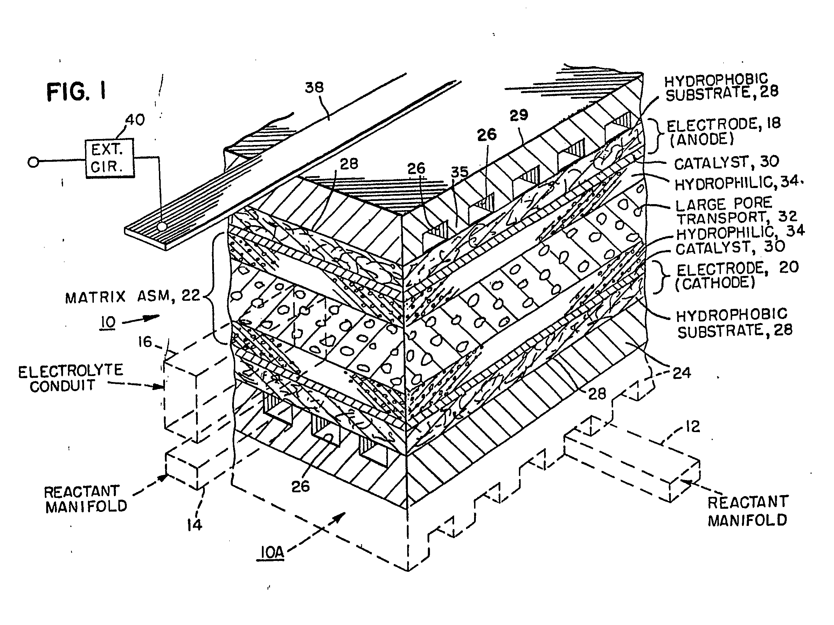

Figure 1 shows a fuel cell 10 in perspective view. While the following description of the fuel cell 10 is in detail, it will be apparent that the invention may be utilized with any type of fuel cell known in the art. For instance, as depicted herein, the system used may be one wherein reclaimed electrolyte may be fed into the fuel cell to replenish depleted electrolyte. However, the invention is not limited to this type of fuel cell system.

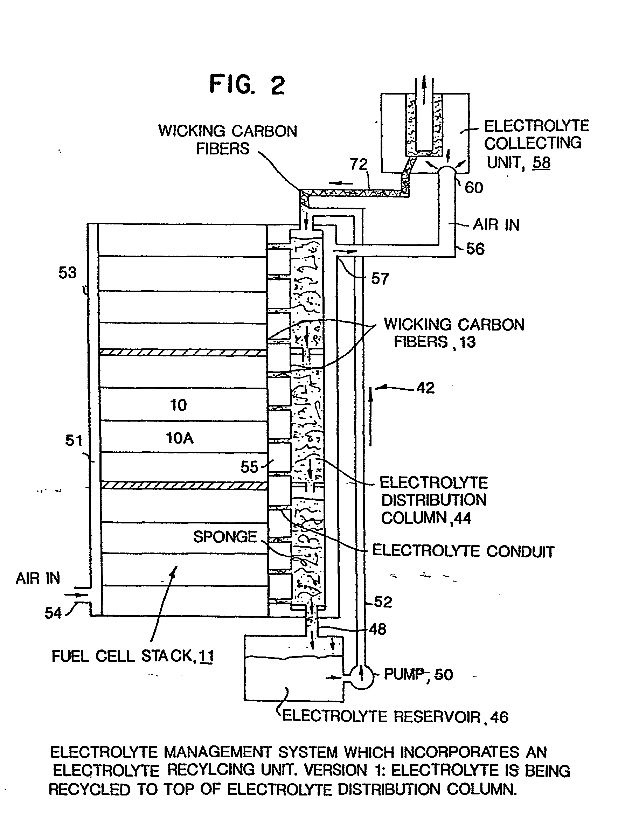

As shown in Figure 1, a part of a second fuel cell 10A, having the same construction as the cell 10, is shown in phantom placed contiguous to the cell 10. The cell 10 is thus understood to be one of many such cells which would ordinarily be placed in a stack as shown in Figure 2. Connections of the cells 10 and 10A via manifolds for the conveyance of reactants and via conduits for the conveyance of electrolyte are shown schematically. Two such representative manifolds are shown: a manifold 12 for the conveyance of hydrogen to the anode or respective cells of the stack and a manifold 14 for the conveyance of air or oxygen to the cathode or respective cells of the stack. A set of electrolyte conduits 16 (only one of which is shown) conveys electrolyte to the respective cells of the stack. Although manifolds 12 and 14 are shown in a representative fashion in Figure 1, it is understood that a single manifold for each reactant running generally along the side of the stack can feed reactants to the cells through respective passages 26.

The fuel cell 10 comprises two electrodes, namely, an anode 18 and a cathode 20 which are separated by a means to draw and distribute electrolyte such as an electrolyte matrix assembly 22. Each electrode abuts a reactant distribution plate 24. The top of the cell in Figure 1, having grooves to bring in and distribute only one reactant since it is at the end of the stack, has a termination plate 24. The plates 24 on the other side of the cell depicted are part of a bi-polar assembly made up of two gas distribution plates 24 in back-to-back position to supply reactants to the cell shown and the adjacent cell not shown. Plates 24, both the termination plate, and the bi-polar assembly, have passages 26 for the entry of the fluidic or gaseous reactants and discharge of any residual gases. Each electrode comprises a hydrophobic substrate layer 28 and a catalyst 30. The respective plates 24 of the cells 10 and 10A provide a serious interconnection of the two cells. The means to draw and distribute electrolyte in the cell can be of any suitable type. For instance, it can be a material having pores therein of a particular size to draw and distribute the electrolyte. Alternatively, it can be a material made from two or more layers of different size pores, such as that shown in Figure 1.

The matrix assembly 22 comprises a central permeable layer 32 of fibrous carbon sheet material having relatively large pores, the central layer 32 being positioned between two outside permeable layers 34 with pores which are smaller than the pores of the central layer 32. The electrolyte, typically phosphoric acid, is contained in the central layer 32. The pores of the central layer 32 are sufficiently large to permit the electrolyte to freely migrate through the central layer 32 so as to replenish the electrolyte within the cell 10 as may be required. The central layer 32 need not necessarily be completely filled with the electrolyte, it being necessary only to provide sufficient electrolyte to insure ionic conductivity between the electrodes 18 and 20.

The smaller pores of the outside hydrophilic layers 34 exert a strong capillary force which draws in the electrolyte from the central layer 32 to completely fill each of the outside layers 34. Layers 34 have a fast rate of uptake of electrolyte contained in the large pore layer 32 as needed. By providing adequate electrolyte to layers 34, each outside layer 34 serves as a barrier against the flow of reactant gas into the matrix assembly area. Thus, electrolyte is found in each of the three layers of the matrix assembly 22 to provide ionic conductivity therein; that is, the electrolyte therein serves as a path by which positive hydrogen ions can migrate via ionic current transport from the anode 18 to the cathode 20.

The hydrophobic layers 28 are impregnated with PTFE on the base material of the fibrous carbon to produce the hydrophobic characteristics. The hydrophobic layer 28 is characterized by large pores through which the gaseous reactants can freely circulate so as to propagate from the passages 26 to the catalyst 30. Thus, the catalyst 30 is surrounded by hydrophobic and hydrophilic layers, the hydrophobic layer facing the gaseous reactants and the hydrophilic layer facing the electrolyte.

The hydrophobic layer 28 in each electrode is impregnated with PTFE particles to prevent the electrolyte from flooding into the electrode. This is an advantageous feature in the construction of the cell 10 since such flooding, if permitted, would reduce the number of open pores through which the gaseous reactants must pass in the electrodes. A reduced number of available pores would result in a diminution in the capacity of the cell to produce electricity.

The hydrophobic layer 28 brings the gaseous reactant into contact with the catalyst 30 while the hydrophilic layer 34 brings the electrolyte into contact with the catalyst 30. Thereby, respective electrochemical reactions can take place at the catalyst 30 of the anode 18 and at the catalyst 30 of the electrode 20. The catalyst 30 is conveniently formed of a precious metal such as platinum with or without other metals which, for the purpose of bonding and wet-proofing, is deposited on the hydrophobic layer 28. The same construction is utilized in each of the electrodes 18 and 20.

It is noted that both the hydrophobic layer 28, the plate 24 and the electrodes 18 and 20 are electrically conducting. Thus, in the case of the anode 18, electrons released by the electrochemical reactions can propagate from the catalyst 30 through the carbon mat of the hydrophobic layer 28 and into the partitions or ribs 36 of the plate 24 which separate the respective passages 26.

In the series arrangement depicted in Figure 1, the electrons from the anode of one cell are conducted directly to the cathode of the adjoining cell so as to migrate through the entire stack. An exemplary stack termination contact 38 is shown attached by conventional methods to the plate 24 of the anode 18. The contact 38 is coupled to an external circuit 40 (indicated in block diagrammatic form) while the other terminal of the external circuit 40 is coupled to a similar contact (not shown) at the opposite end of the stack of the fuel cells. The electrons can, thereby, make a complete circuit from the negative terminal of the stack (the last of the anodes) via the external circuit 40 to the positive terminal of the stack (the first of the cathodes). Correspondingly, the hydrogen ions can migrate in each cell through the electrolyte contained in the matrix assembly proceeding from the anode of the cell through the electrolyte to the cathode.

As shown in Figure 2, fuel cells 10 are stacked to form a fuel cell stack II. Surrounding the fuel cell stack 11 is a protective container or stack housing 53. The protective container 53 can be of any type known in the art whereby the fuel cell stack 11 is protected from possible damage by external sources and also provides a means to contain any inadvertent leakage of the liquid electrolyte.

The container 53 is preferably sealingly engaged (to the atmosphere) with the fuel cell stack 11 and has inlets and outlets for the reactant gas. Air containing the reactant oxygen is admitted into the container 53 through a reactant inlet 54. A similar inlet (not shown) is provided for the other reactant. A means to introduce the reactant (not shown) may be of any type known to the art, such as a fan. The reactant gas inlet 54 communicates with an inlet chamber 51 which allows the air or oxygen to access the entrances to the reactant manifolds 14 (see Figure 1) of each of the cells 10 in the stack 11. The configuration of the fuel cell stack 11 sealingly engaged with the container 53 defines the path of the air or oxygen through the fuel cells 10. The other reactant is passed in and out of the cells via its own inlets and outlets and kept separate from the air or oxygen in the stack in this manner.

The opposite ends of the reactant manifolds 14, communicate with an outlet chamber 55. The outlet chamber 55 communicates with a reactant gas outlet 57 whereby the air or oxygen can exit the protective container 53. A similar outlet (not shown) also is provided for the other reactant.

The embodiment of the invention as shown in Figure 2 has an electrolyte replenishment system 42. The electrolyte replenishment system 42 may be of any type known to the art, and preferably, the system is capable of supplying electrolyte to the fuel cells 10 when necessary.

As shown in the embodiment of Figure 2, and for illustrative purposes only, the replenishment system 42 comprises an electrolyte distribution column 44. The column 44 is connected to the fuel cells 10 via electrolyte conduits 16 containing wicking carbon fibers 13. The wicking carbon fibers are relatively dense, rope-like material which is saturated with the electrolyte and aids in transporting the electrolyte by means of capillary action. The replenishing electrolyte is stored in an electrolyte reservoir 46 whereby a pump 50 may pump the electrolyte via piping 52 to the top of the electrolyte distribution column 44. Excess electrolyte within the distribution column 44 that is not used by the fuel cells 10 may be transported back to the reservoir 46 via piping 48 located at the bottom of the distribution column 44.

The reactant outlet 57 (in this case, an air or oxygen outlet) is connected to a reactant conduit 56. The reactant conduit 56 connects the container 53 to an electrolyte reclaiming unit 58. The air or oxygen propelled by a fan or like means (not shown) enters the container 53 through the reactant manifolds 14 of the fuel cells. In the course of operation of the fuel cells, not all of the electrolyte remains within the matrix assembly 22, but some quantity thereof finds its way eventually into the passages 26 where it is suspended in the form of a vapor or droplets. As the air or oxygen flows through the passages 26 of a cell from the inlet chamber 51 to the outlet chamber 55, and beyond, it assimilates the electrolyte vapor or droplets to thereby create mixture composed of air or oxygen and of an electrolyte mist, that is, particles of electrolyte of sub-micron size. This mixture of air or oxygen and electrolyte vapor or mist is forced out of the container 53 at outlet 57 by newly entering air or oxygen at the inlet 54. The mixture of air or oxygen and electrolyte material then travels through the conduit 56 to the reclaiming unit 58. Though the system for transporting the reactant and electrolyte mist has been described in detail, any suitable material or configuration could be used to accomplish the system's preferred function.

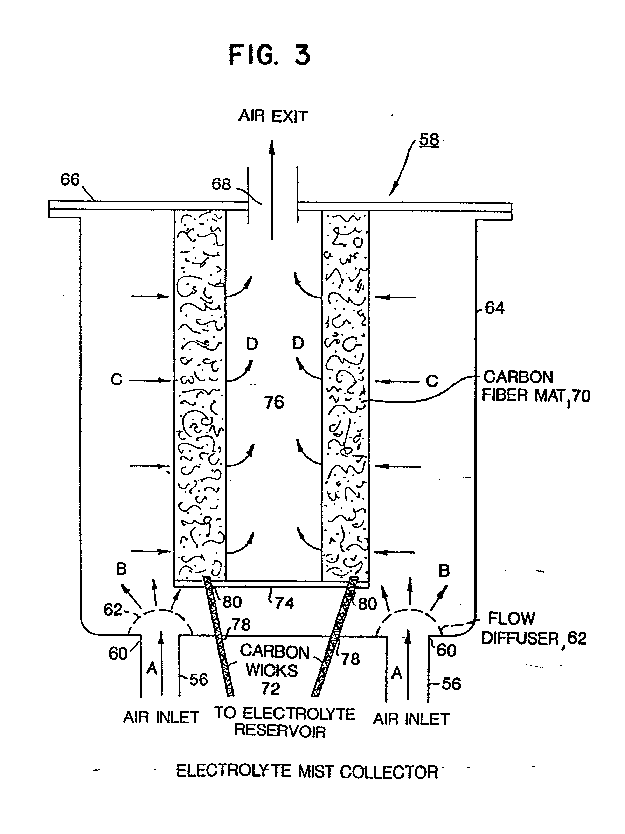

Figure 3 shows an enlarged view of the electrolyte reclaiming unit 58 having a housing 64. This embodiment utilizes a plurality of reactant conduits 56 which communicate with the housing 64 at inlets 60 and extend from the outlets 57 at the container 53. Preferably, a flow diffuser 62 is located at each inlet 60 and is provided to insure proper distribution of the air or oxygen and electrolyte mist mixture throughout the housing 64. This diffusion occurs simultaneously with the substantial reduction in velocity of the incoming mixture. Such velocity reduction enhances the diffusion process and occurs by reason of the large volume ratio existing between the housing 64 and the conduits 56. Sealingly engaged with the housing 64 is a cover 66. Although the housing 64 may be constructed as a unitary member, the cover 66 also may be constructed so as to be detachable from the housing 64 to provide access to the interior of the reclaiming unit 58 for maintenance, repair, or systematic checking.

Located within the housing 64 is a carbon fiber sponge 70 as best seen in Figure 3. Throughout this specification, the term "sponge" is to be understood to mean a very porous, pliable, fibrous structure through which a gas stream may be passed without significant pressure drop. A construction of the sponge 70 suitable for purposes of the invention is activated carbon cloth, Type KFN-1500-150 sold by Toyobo Company, Ltd. of Osaka, Japan. Among its characteristics are the following:

weight - 150 g/m²

bulk density - 0.20 g/cm³

air permeability - 7100 cm³ of air/cm²/min. at a pressure drop of 12.5 mm water

BET surface area - 1450 +/- 50 m²/g

The top of the sponge 70 is attached to the cover 66, and located at the opposite end of the sponge 70 is a base plate 74. Preferably, the sponge 70 is sealingly engaged to both the cover 66 and the base plate 74. As illustrated, the fiber sponge 70 is cylindrical in shape and encompasses a hollow core or chamber 76. This chamber 76 communicates with an exit 68 located in the cover 66 for venting the purified air or oxygen to the atmosphere. While this form of construction is preferred, numerous other shapes and designs can be employed for purposes of the invention.

As the air or oxygen carrying the electrolyte mist enters the housing 64, as shown by directional arrows A, it passes through the flow diffusers 62 and enters the interior of the housing 64 as shown by directional arrows B. The mixture of air or oxygen and electrolyte mist which is uniformly distributed throughout the interior of the housing is then forced into the carbon fiber sponge 70 by newly entering air or oxygen and mist as shown by directional arrows C. The sealing engagements between the base plate 74 and the sponge 70 and between the cover 66 and the sponge 70 prevent the mixture from exiting the reclaiming unit 58 without first travelling through the carbon fiber sponge 70.

The generally cylindrical construction of the carbon fiber sponge 70 as illustrated in Figure 3 allows the air or oxygen to pass through the sponge 70 into the interior chamber 76 where it may exit the housing 64 at the exit 68 in the cover 66. As the electrolyte mist is carried into the sponge 70 with the air or oxygen, the electrolyte material is deposited on the fibers of the fiber sponge 70. At the same time that the sponge is sufficiently dense to remove the electrolyte unit from the air, it is sufficiently porous to allow free passage of the cleansed air therethrough. In time, the mist particles coalesce to form droplets.

The coalescing process generally is a characteristic of the carbon fiber sponge 70 whereby the velocity of the small particles of electrolyte material is reduced to a point where newly entering mist unites with the slower moving electrolyte particles. This forms ever larger particles thereby increasing their resistance to be carried by the flowing air or oxygen and increasing the surface area for removing and collecting more electrolyte. These particles then descend to the base of the fiber sponge. Although the means for removing and collecting the electrolyte mist from the reactant gas has been generally described as a carbon fiber sponge 70, it is obvious that the system for reclaiming the electrolyte could be used with any other suitable material or configuration of the material to functionally accomplish the removal and collecting of the electrolyte from the reactant gas.

Located at the bottom of the carbon fiber sponge 70 are carbon wicks 72. As with the wicking carbon fibers 13, the wicks 72 are relatively dense, rope-like material composed of carbon or other suitable material. The wicks 72 are in direct contact with the sponge 70 and pass through apertures 80 in the base plate 74 and apertures 78 in the housing 64. Preferably, the wicks 72 are sealingly engaged with both apertures 78 and 80 to prevent the air or oxygen and electrolyte mist from exiting the housing before passing through the sponge 70.

The carbon wicks 72 may be of any conventional design whereby the collected electrolyte material may enter the wicks 72 at the carbon fiber sponge 70 and flow through the wicks 72 to its opposite end where the electrolyte may exit. Preferably, the sides of the wicks 72 are coated with a suitable coating to prevent the electrolyte from escaping before it reaches the wick's exit end. However, it should be apparent to one skilled in the art that any suitable means or material to transport the collected electrolyte may be used with the system.

In one embodiment of the invention, as shown in Figure 2, the wicks 72 transport the collected electrolyte from the carbon fiber sponge 70 to the top of the electrolyte distribution column 44 of the replenishment system 42. Generally, the transport of the collected electrolyte is controlled by capillary forces and by gravity causing the electrolyte in the wicks 72 to travel in a downward direction.

In operation, air or oxygen is introduced into the fuel cell stack 11 at the reactant inlet 54. The air or oxygen then enters the open ends of the manifold 14 into the passages 26 of the cathodes 20 in each of the cells of the stack. Hydrogen is admitted into the manifold 12 to the passages 26 in the anodes 18 of each of the cells in the stack. Electrolyte is applied via the set of conduits 16 to make contact with the central layers 34 of the membranes 22 in the respective fuel cells of the stack.

By capillary action, the electrolyte is brought into contact with the catalyst 30 in each of the electrodes 18 or 20. The hydrogen propagates from the passages 26 through the pores of the hydrophobic layer 28 to the catalyst 30 in the anode 18. Thereby, the hydrogen and the electrolyte are placed in contact with each other at the interface of the catalyst 30 at the anode 18, and the air or oxygen and the electrolyte are placed in contact with each other at the interface of the catalyst 30 of the cathode 20 to provide for the respective electrochemical reactions at the anode 18 and cathode 20. It is in these locations of the cell that the respective electrochemical reactions to produce ion flow across the electrolyte and, therefore, electricity occurs.

Further details on the construction of the respective layers of the cell 10 are well known, and are described, by way of example, in the foregoing U.S. Patents 3,453,149; 4,064,322 and 4,175,165. These patents describe the construction of cells utilizing porous material with PTFE and coatings of precious metal catalysts. The multiple porosity characteristic of the matrix assembly 22 provides for both the hydrophilic properties of the other layers 34 while utilizing the larger pores of the central layer 32 for holding, moving and distributing the electrolyte so as to maintain the electrolytic saturation of the outer layers 34 during operation of the cell 10. In addition, the presence of the electrolyte in all three layers of the matrix assembly 22 provides the requisite conduction path for the hydrogen ions. Thus, the matrix assembly 22 of the invention permits the cell 10 to operate normally while maintaining the uniform distribution and the proper level of electrolyte therein.

The matrix assembly 22 of each cell is continuously in contact with a quantity of electrolyte held outside the cell and brought in by the set of conduits 16 from an external reservoir 46 of such electrolyte as shown in Figure 2. This insures that the cell 10 is always filled with the requisite amount of electrolyte until the reservoir 46 is depleted.

As reactant gases flow through the cells, some of the electrolyte is transformed into vapor. This electrolyte vapor penetrates into the passages 26 thereby mixing with the air or oxygen to form an electrolyte mist. As new air or oxygen is introduced into the fuel cell stack 11 at the reactant gas inlet 54, the residual air or oxygen and electrolyte mist are pushed through and exit the fuel cells 10 into the outlet chambers 55. As air or oxygen is continually introduced through the reactant gas inlet 54 and the air or oxygen and electrolyte mist mixture enters the chamber 55, the mixture in the chamber 55 is forced into the reactant conduit 56.

The mixture in the conduit 56 is correspondingly pushed through the conduit 56 towards the electrolyte collecting unit 58. The air or oxygen and electrolyte mist enter the reclaiming unit 58 at the inlets 60. The velocity of the electrolyte mist is reduced as it passes into the interior of the housing 64 though the flow diffusers 62.

The continuing entrance of air or oxygen carrying the electrolyte mist into the housing 64 forces the mixture into the carbon fiber sponge 70, as shown by the directional flow arrows B and C in Figure 3. The electrolyte mist is removed from the carrying air or oxygen and collects on the carbon fiber sponge 70. The air or oxygen, after it passes through the sponge 70, enters the chamber 76 with a substantial percentage of the electrolyte effluent having been removed. Once in the chamber 76, the air or oxygen can exit the housing 64 at the exit 68.

As the electrolyte that is collected by the carbon fiber sponge 70 increases, a wicking process takes place according to which the excess electrolyte is absorbed by the carbon fiber wicks 72 which transport the electrolyte back to the electrolyte distribution system 42 as shown in Figure 2.

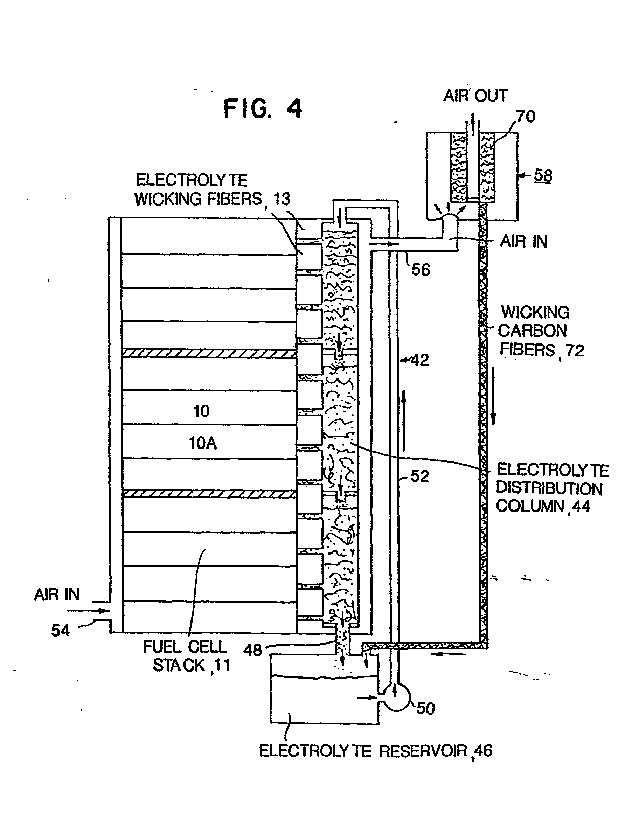

An alternate embodiment of the invention is shown in Figure 4. In this embodiment, the electrolyte that is collected by the carbon fiber sponge 70 is transported by the carbon fiber wicks 72 back to the electrolyte reservoir 46 for storage until it is needed.

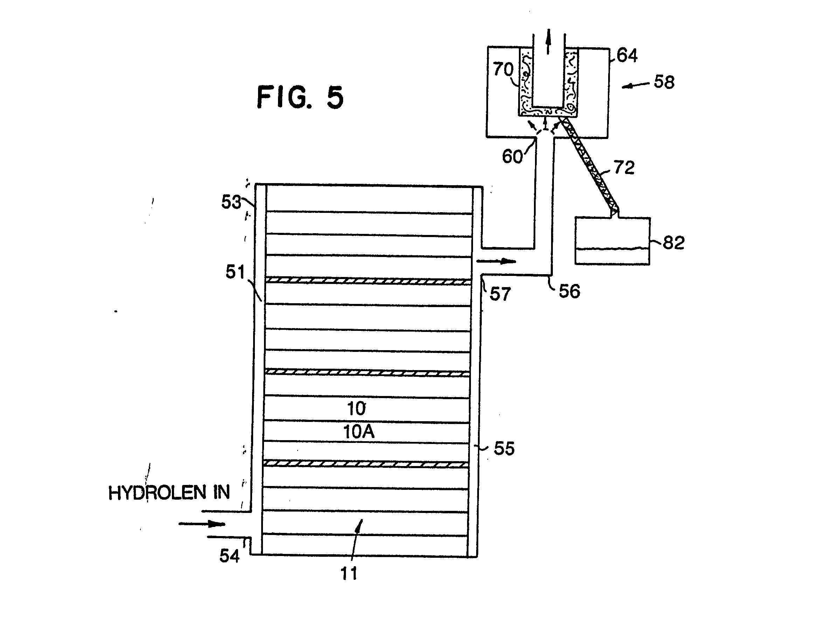

In Figure 5, yet another alternate embodiment of the invention is shown. In this embodiment the reactant, hydrogen, and electrolyte mist are transported to an electrolyte reclamation unit 58 where the electrolyte is removed, collected, and transported to a storage unit 82. The hydrogen can then be recirculated or exited from the system.

It should be understood that the foregoing description is only illustrative of the invention. One obvious modification to the invention would be to provide a plurality of electrolyte collecting units in a series or parallel arrangement. Yet another obvious modification would be to provide a plurality of carbon fiber sponges and exits within one electrolyte collecting unit. Still another obvious modification of the invention would be to recirculate the exiting reactant through the electrolyte collecting unit a plurality of times for a more efficient removal of the electrolyte. Other obvious alternatives of the invention would be to provide an electrolyte reclamation system for each cell in the stack or section of cells in the stack.

Various alternatives and modifications in the structural and functional features of the invention can be devised by those skilled in the art without departing from the invention, as defined in the appended claims.

**Claims**

1. A fuel cell having
an electrolyte-containing matrix assembly (22),
an electrolyte reservoir (46) in communication therewith,
an inlet chamber (51) for each reactant entering the fuel cell,
an outlet chamber (55) for reactants leaving the fuel cell,
a pump for pumping the reactants from the inlet chambers (51) to the outlet chamber (55),

an electrolyte collecting unit (58), located external of the fuel cell, for reclaiming electrolyte which is assimilated by the reactants passing through the fuel cell, and

means (72) for returning reclaimed electrolyte to the electrolyte reservoir, characterised in that

the electrolyte collecting unit (58) comprises a fibrous sponge (70), through which reactants leaving the fuel cell are passed prior to being vented to the atmosphere.

2. A fuel cell according to claim 1 wherein the electrolyte collecting unit (58) comprises an enclosed housing (64) connected to the outlet chamber (55) by a conduit (56), the housing having an exit (68) for the reactants and defining an interior volume which is much greater than that of the conduit (56), thereby substantially reducing the velocity of the mixture of reactants and electrolyte as it travels from the conduit (56) into the housing (64), and wherein the fibrous sponge (70) is a carbon fibre sponge which is capable of capturing the electrolyte from the reactants and causing it to coalesce to droplet form while permitting continued passage therethrough of the reactants.

3. A fuel cell according to claim 2 wherein the electrolyte collecting unit includes a defuser (62) positioned between the conduit (56) and the interior of the housing (64) for defusing the mixture as it enters the housing.

4. A fuel cell according to claim 2 or claim 3, wherein the carbon fibre sponge (70) defines an internal cavity (76) communicating with the exit, the path flow of the mixture being in the direction of the cavity.

5. A fuel cell according to claim 4 wherein the carbon fibre sponge is generally in the form of a cylinder coaxial with the exit (68) and defining an internal cavity (76) communicating with the exit.

6. A fuel cell according to any preceding claim wherein the means (72) for returning electrolyte to the reservoir (46) include a return conduit extending between the fibrous sponge (70) and the reservoir, the conduit containing a carbon wick.

7. A fuel cell according to any of claims 1 to 5, further comprising an electrolyte distribution column (44) in communication with the matrix assembly (22), and wherein the means for returning electrolyte to the reservoir includes a return conduit (72) extending between the fibrous sponge (70) and the electrolyte distribution column (44), the conduit (72) containing a carbon wick.

8. A fuel cell system comprising a plurality of fuel cells according to any preceding claim operatively joined in a stacked relationship.

9. A method of operating a fuel cell according to any preceding claim, said method including the steps of

pumping the reactants from the inlet chambers (51) to the outlet chamber (55) such that the reactants assimilate quantities of the electrolyte present in the fuel cell in the form of a mist during operation of the fuel cell, thereby to create at the outlet chamber (55) a mixture composed of the reactants and the electrolyte mist;

transporting the mixture to the electrolyte collecting unit (58);

recovering the electrolyte from the reactant by coalescing the mist on the fibrous sponge (70) in the electrolyte collecting unit (58), thereby purifying the reactants; and

returning the reclaimed electrolyte to the reservoir (46).

**Patentansprüche**

1. Eine Brennstoffzelle mit
einer Elektrolyt enthaltenden Matrixanordnung (22),
einem damit in Verbindung stehenden Elektrolytreservior (46),
einer Einlaßkammer (51) für jeden in die Brennstoffzelle kommenden Reaktanden,
einer Auslaßkammer (55) für jeden die Brennstoffzelle verlassenden Reaktanden,
einer Pumpe zum Pumpen der Reaktanden von der Einlaßkammer (51) zur Auslaßkammer (55),
einer Elektrolytsammeleinheit (58), die sich außerhalb der Brennstoffzelle befindet, zur Rückgewinnung von Elektrolyt, der von den die Brennstoffzelle passierenden Reaktanden angelagert wurde, und mit
einer Vorrichtung (72) zum Zurückführen des wiedergewonnen Elektrolyten in das Elektrolytreservoir, dadurch gekennzeichnet, daß
die Elektrolytsammeleinheit (58) einen Faserschwamm (70) aufweist, durch den die die Brennstoffzelle verlassenden Reaktanden passieren, bevor sie in die Atmosphäre geblasen werden.

2. Eine Brennstoffzelle nach Anspruch 1, bei der die Elektrolytsammeleinheit (58) ein über ein Rohr (56) mit der Auslaßkammer verbundenes, abgeschlossenes Gehäuse (64) aufweist, wobei das Gehäuse einen Ausgang (68) für die Reaktanden besitzt und ein inneres Volumen bildet, das viel gröber ist als das des Rohres (56), wodurch die Geschwindigkeit der Mischung aus Reaktanden und Elektrolyt bei ihrem Weg von dem Rohr (56) in das Gehäuse (64) beträchtlich verringert wird, und bei der der Faserschwamm (70) ein Schwamm aus Karbonfasern ist, der geeignet ist, den Elektrolyt von den Reaktanden abzufangen und ihn in Tröpfchenform kondensieren zu lassen, während er eine kontinuierliche Passage der Reaktanden ermöglicht.

3. Eine Brennstoffzelle nach Anspruch 2, bei der die Elektrolytsammeleinheit einen zwischen dem Rohr (56) und dem Inneren des Gehäuses (64) angeordneten Zerstäuber (62) zum Zerstäuben der Mischung bei ihrem Eintritt in das Gehäuse umfaßt.

4. Eine Brennstoffzelle nach Anspruch 2 oder 3, bei der der Karbonfaserschwamm (70) einen mit dem Ausgang in Verbindung stehenden Hohlraum (76) bildet, wobei die Fließrichtung der Mischung in Richtung des Hohlraums ist.

5. Eine Brennstoffzelle nach Anspruch 4, bei der Karbonfaserschwamm allgemein die Form eines mit dem Ausgang (68) koaxialen Zylinders besitzt und einem mit dem Ausgang (76) in Verbindung stehenden Hohlraum bildet.

6. Eine Brennstoffzelle nach einem der vorhergehenden Ansprüche, bei der die Vorrichtung (72) zum Zurückführen des Elektrolyten in das Reservoir (46) ein Rückführrohr umfaßt, das sich zwischen dem Faserschwamm (70) und dem Reservoir erstreckt, wobei das Rohr einen Karbondocht enthält.

7. Eine Brennstoffzelle nach einem der Ansprüche 1 bis 5, die weiterhin eine mit der Matrixanordnung (22) in Verbindung stehende Elektrolytverteilungssäule (44) aufweist und bei der die Vorrichtung zum Rückführen des Elektrolyten zum Reservoir ein Rückführrohr (72) aufweist, das sich zwischen dem Faserschwamm (70) und der Elektrolytverteilungssäule (44) erstreckt, wobei das Rohr (72) einen Karbondocht enthält.

8. Ein Brennstoffzellensystem mit einer Mehrzahl von Brennstoffzellen nach einem der vorhergehenden Ansprüche, die operativ in einem Stapel verbunden sind.

9. Ein Verfahren zum Betreiben einer Brennstoffzelle nach einem der vorhergehenden Ansprüche, wobei dieses Verfahren folgende Schritte aufweist:

dass Pumpen der Reaktanden von den Einlaßkammern (51) in die Auslaßkammer (55) in solcher Weise, daß die Reaktanden Mengen von Elektrolyt anlagern, der während dem Betrieb der Brennstoffzelle in der Form von Nebel vorliegt, wodurch in der Auslaßkammer (55) eine aus den Reaktanden und dem Elektrolytnebel bestehende Mischung erzeugt wird;

das Transportieren der Mischung zur Elektrolytsammeleinheit (58);

die Rückgewinnung des Elektrolyten von dem Reaktanden durch Kondensieren des Nebels auf dem Faserschwamm (70) in der Elektrolytsammeleinheit (58), wodurch die Reaktanden gereinigt werden; und

das Rückführen des rückgewonnenen Elektrolyten in das Reservoir (46).

**Revendications**

1. Une pile à combustible comportant:

un ensemble à matrice (22) contenant un électrolyte,

un réservoir d'électrolyte (46) en communication avec cet ensemble,

une chambre d'entrée (51) pour chaque réactif pénétrant dans la pile à combustible,

une chambre de sortie (55) pour des réactifs sortant de la pile à combustible,

une pompe pour pomper les réactifs des chambres d'entrée (51) vers la chambre de sortie (55),

une unité (58) collectrice d'électrolyte, située à l'extérieur de la pile à combustible, pour régénérer l'électrolyte qui est assimilé par les réactifs passant dans la pile à combustible, et

un moyen (72) pour renvoyer l'électrolyte régénéré au réservoir d'électrolyte, caractérisé en ce que

l'unité (58) collectrice d'électrolyte comprend une éponge fibreuse (70) au travers de laquelle des réactifs quittant la pile à combustible passent avant d'être dé chargés dans l'atmosphère.

2. Une pile à combustible selon la revendication 1, dans laquelle l'unité (58) collectrice d'électrolyte comprend un carter fermé (64) relié à la chambre de sortie (55) par un conduit (56), le carter comportant une sortie (68) pour les réactifs et définissant un volume intérieur qui est bien plus grand que celui du conduit (56), en réduisant ainsi sensiblement la vitesse du mélange de réactifs et d'électrolyte quand il se déplace du conduit (56) dans le carter (64), et dans laquelle l'éponge fibreuse (70) est une éponge en fibres de carbone qui est capable de capter l'électrolyte entraîné par les réactifs et de produire par coalescence sa transformation en gouttelettes tout en permettant un passage continu des réactifs à travers l'éponge.

3. Une pile à combustible selon la revendication 2, dans laquelle l'unité collectrice d'électrolyte comprend un diffuseur (62) positionné entre le conduit (56) et l'intérieur du carter (64) pour faire diffuser le mélange quand il pénètre dans le carter.

4. Une pile à combustible selon la revendication 2 ou la revendication 3, dans laquelle l'éponge (70) en fibres decarbone définit une cavité interne (76) communiquant avec la sortie, le trajet d'écoulement du mélange étant dans la direction de la cavité.

5. Une pile à combustible selon la revendication 4, dans laquelle l'éponge en fibres de carbone a dans l'ensemble la forme d'un cylindre coaxial à la sortie (68) et définissant une cavité interne (76) communiquant avec la sortie.

6. Une pile à combustible selon une quelconque des revendications précédentes, dans laquelle le moyen (72) de renvoi de l'électrolyte au réservoir (46) comprend un conduit de retour s'étendant entre l'éponge fibreuse (70) et le réservoir, le conduit contenant une mèche en carbone.

7. Une pile à combustible selon une quelconque des revendications 1 à 5, comprenant en outre une colonne (44) de distribution d'électrolyte en communication avec l'ensemble à matrice (22) et dans laquelle le moyen de renvoi de l'électrolyte au réservoir comprend un conduit de retour (72) s'étendant entre l'éponge fibreuse (70) et la colonne (44) de distribution d'électrolyte, le conduit (72) contenant une mèche en carbone.

8. Un système de piles à combustible comprenant une pluralité de piles à combustible selon une quelconque des revendications précédentes, reliées fonctionnellement dans une relation d'empilage.

9. Un procédé pour faire fonctionner une pile à combustion selon une quelconque des revendications précédentes, ledit procédé comprenant les étapes consistant à:

pomper les réactifs des chambres d'entrée (51) vers la chambre de sortie (55) de telle sorte que les réactifs assimilent des quantités d'électrolyte présent dans la pile à combustible sous la forme d'un brouillard pendant le fonctionnement de la pile à combustible, en créant ainsi dans la chambre de sortie (55) un mélange composé des réactifs et du brouillard d'électrolyte;

transporter le mélange vers l'unité (58) collectrice d'électrolyte;

récupérer l'électrolyte à partir des réactifs par coalescence du brouillard sur l'éponge fibreuse (70) dans l'unité (58) collectrice d'électrolyte, en épurant ainsi les réactifs; et

renvoyer l'électrolyte régénéré au réservoir (46).

FIG. 1

EXT. CIR. 40

38

26  29

HYDROPHOBIC SUBSTRATE, 28

ELECTRODE, 18 (ANODE)

CATALYST, 30
HYDROPHILIC, 34.

LARGE PORE TRANSPORT, 32
HYDROPHILIC, 34
CATALYST, 30

ELECTRODE, 20 (CATHODE)

HYDROPHOBIC SUBSTRATE, 28

28  26  35

MATRIX ASM, 22

10

16

ELECTROLYTE CONDUIT

24

28

12

REACTANT MANIFOLD

26

14

10A

REACTANT MANIFOLD

EP 0 181 134 B1

# FIG. 2

WICKING CARBON FIBERS

72

ELECTROLYTE COLLECTING UNIT, 58

60

53

AIR IN

56

57

WICKING CARBON FIBERS ,13

42

10

10A

51

55

ELECTROLYTE DISTRIBUTION COLUMN ,44

SPONGE

ELECTROLYTE CONDUIT

AIR IN

52

48

54

FUEL CELL STACK, 11

PUMP, 50

ELECTROLYTE RESERVOIR , 46

ELECTROLYTE MANAGEMENT SYSTEM WHICH INCORPORATES AN ELECTROLYTE RECYLCING UNIT. VERSION 1: ELECTROLYTE IS BEING RECYCLED TO TOP OF ELECTROLYTE DISTRIBUTION COLUMN.

# FIG. 3

AIR EXIT

58

66

68

64

D D

C C — CARBON FIBER MAT, 70

76

B B

62 80 80 FLOW DIFFUSER, 62

74

78

60 60

A 56 CARBON WICKS 72 78 A 56

AIR INLET TO ELECTROLYTE RESERVOIR AIR INLET

ELECTROLYTE MIST COLLECTOR

# FIG. 4

ELECTROLYTE WICKING FIBERS, 13

AIR OUT

70

58

AIR IN

56

WICKING CARBON FIBERS, 72

42

10

10A

52

ELECTROLYTE DISTRIBUTION COLUMN, 44

AIR IN

54

FUEL CELL STACK, 11

48

50

ELECTROLYTE RESERVOIR, 46

FIG. 5